# EUROPEAN PATENT SPECIFICATION

(11) **EP 1 961 601 B1**
(45) Date of publication and mention of the grant of the patent: **21.09.2011**
(21) Application number: 08290169.5
(22) Date of filing: 22.02.2008
(51) Int. Cl.: B60K 1/04, B60H 1/00

(54) **Battery cooling device for vehicles and control method thereof**
Batteriekühlvorrichtung für Fahrzeuge und Steuerungsverfahren dafür
Dispositif de refroidissement de batterie pour véhicules et son procédé de contrôle

(30) Priority: 23.02.2007 KR 20070018158; 01.02.2008 KR 20080010549
(43) Date of publication of application: 27.08.2008
(73) Proprietor: Halla Climate Control Corporation, Daejeon-si 306-230 (KR)
(72) Inventor: Lee, Daewoong, Daejeon-si 306-230 (KR); Kwon, Daebok, Daejeon-si 306-230 (KR); Jang, Kilsang, Daejeon-si 306-230 (KR)
(74) Representative: Hirsch & Associés

(56) References cited:
- EP-A- 1 717 083
- EP-A1- 0 780 556
- EP-A2- 0 928 886
- WO-A-03/064199
- US-A- 5 937 664
- US-A1- 2002 184 908
- US-A1- 2004 194 497
- US-A1- 2005 061 497
- US-B1- 6 302 066

## Description

### BACKGROUND OF THE INVENTION

### Field of the Invention

The present invention relates to a battery cooling device for vehicles and control method thereof, and more particularly, to a battery cooling device for vehicles and a method for controlling the battery cooling device, which compactly includes battery heat exchanging means mounted on a battery to cool the battery in a water cooling type, and a heat exchanger, air blowing means and cooling water circulating means connected with the battery heat exchanging means, wherein operations of the air blowing means and the cooling water circulating means are controlled in such a way as to compare battery temperature, cooling water temperature and inside air temperature of the vehicle with one another, thereby enhancing efficiency of the battery by properly controlling the battery temperature, reducing power consumption and noise by properly operating the air blowing means and the cooling water circulating means, and satisfying necessary inside temperature conditions while cooling the battery using the inside air of the vehicle.

### Background Art

Recently, hybrid vehicles or fuel cell vehicles, which are environmentally friendly and in consideration of fuel efficiency, have been actively developed all over the world.

Since the hybrid vehicle is driven by driving forces of two kinds by linking the existing engine with a motor driven with electric energy, it can reduce environmental pollution by exhaust gas and enhance fuel efficiency. So, the hybrid vehicles are recently in the limelight in United States and Japan, and occupy its position as the next generation vehicles.

Such a hybrid vehicle has a high capacity battery, and so, the battery supplies electric power to the motor if necessary, and is recharged with electric energy generated from a regenerative power supply when the vehicle is reduced in speed or stopped.

However, since the high capacity battery radiates heat while repeats electric charging and discharging and is reduced in lifespan and cannot be used in the optimum state when temperature rises rapidly, it needs a system for properly cooling the battery to keep the optimum performance.

While there are various types of the battery cooling device, most vehicles adopts an air-cooling type that supplies air to the battery through a duct and discharges warm air to the outside of the vehicle after cooling the battery.

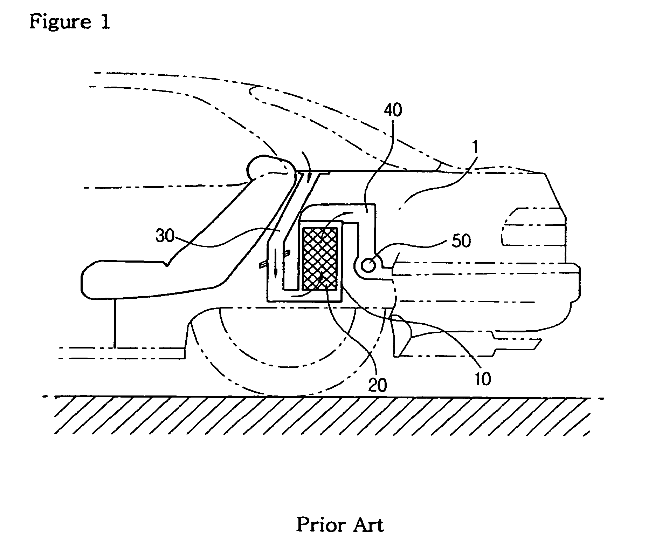

As shown in FIG. 1, the air-cooling type battery cooling device includes an intake duct 30 mounted in a battery case 10 mounted in a trunk room 1 of the vehicle for sucking the inside air of the vehicle, a discharge duct 40 mounted in the battery case 10 for discharging the sucked air to the outside, and a blower 50 mounted on the discharge duct 40 for promoting a good air flow.

When the blower 50 is operated, the inside air of the vehicle is sucked to the inside of the battery case 10 through the intake duct 30, and the sucked air is discharged to the outside through the discharge duct 40 after cooling the battery 20.

A similar functioning may be seen in US-A-5 937 664 that describes a vehicle-use battery system for cooling a battery mounted in a vehicle whose vehicle compartment is air conditioned by an air conditioner, so as to maintain the battery in a predetermined temperature range, by supplying air in the vehicle compartment to an interior of a battery chamber and by exhausting the air used to outside the vehicle. Further, US-A-2002/0184908 also describes a vehicle cooling system for a vehicle battery or fuel cell for a hybrid vehicle, the cooling being achieved by thermal integration into the refrigeration circuit of on air-conditioning system of the vehicle, notably by drawing out air of the passenger compartment.

However, the air-cooling type battery cooling device has several problems in that it is deteriorated in a cooling performance due to a low heat transfer efficiency of the air, and in that it is very difficult to control the inside temperature of the battery only by controlling a fan speed of the blower.

In addition, in view of the tendency that the capacity of the battery is gradually increased, heat generation of the battery may be increased, and hence, the air-cooling type battery cooling device has a limit to enhance the cooling performance.

In the meantime, there is a water-cooling type battery cooling device using cooling water of an engine, but is has a problem in that it is deteriorated in practicality since temperature of the cooling water is too high.

The water-cooling type battery cooling device cools the battery using the cooling water of the engine cooled through a radiator, which exchanges heat with the outside air. However, the water-cooling type battery cooling device has another problem in that its cooling efficiency lowers since the cooling system introduces the outside air of high temperature thereto to cool the cooling water in the summer season.

### SUMMARY OF THE INVENTION

Accordingly, the present invention has been made to solve the above-mentioned problems occurring in the prior arts, and it is an object of the present invention to provide a battery cooling device for vehicles, which compactly includes battery heat exchanging means mounted on a battery to cooling the battery in a water cooling type, and a heat exchanger, air blowing means and cooling water circulating means connected with the battery heat exchanging means, wherein operations of the air blowing means and the cooling water circulating means are controlled in such a way as to compare battery temperature, cooling water temperature and inside air temperature of the vehicle with one another, thereby enhancing efficiency of the battery by properly controlling the battery temperature, reducing power consumption and noise by properly operating the air blowing means and the cooling water circulating means, and satisfying necessary inside temperature conditions while cooling the battery using the inside air of the vehicle.

To accomplish the above object, according to the present invention, there is provided a battery cooling device as defined in claim 1.

In addition, there is provided a method for controlling a battery cooling device for vehicles, which cools a battery mounted in a trunk room of the vehicle, wherein the control method comprises the steps of: comparing a battery temperature (Tb) and a cooling water temperature (Tw) with each other after a battery is turned on by a control signal; turning on cooling water circulating means and driving air blowing means at low speed (LOW) if the battery temperature (Tb) is higher than the cooling water temperature (Tw) as a result of the first step; turning off cooling water circulating means and driving air blowing means at low speed (LOW) if the battery temperature (Tb) is lower than the cooling water temperature (Tw) as a result of the first step; comparing a difference between the cooling water temperature (Tw) and an air temperature (Ta) with a first set temperature; continuously operating the cooling water circulating means and driving the air blowing means at high speed (HIGH) if the difference between the cooling water temperature (Tw) and the air temperature (Ta) is larger than the first set temperature as a result of the fourth step; and turning off the cooling water circulating means if the difference between the cooling water temperature (Tw) and the air temperature (Ta) is smaller than the first set temperature as a result of the fourth step.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a view of a battery cooling device for vehicles according to a prior art;

FIG. 2 is schematic diagram showing a state where a battery cooling device for vehicles according to the present invention is installed in the vehicle;

FIG. 3 is a structural view of the battery cooling device according to the present invention;

FIG. 4 is a front perspective view of the compact-sized battery cooling device according to the present invention;

FIG. 5 is a rear perspective view of the compact-sized battery cooling device according to the present invention;

FIG. 6 is a perspective view of a heat exchanger of the battery cooling device according to the present invention; and

FIG. 7 is a flow chart showing a control method of the battery cooling device according to the present invention.

### DETAILED DESCRIPTION OF THE PREFERRED EMBODIMENT

Reference will be now made in detail to the preferred embodiment of the present invention with reference to the attached drawings.

In the present invention, description of the same configuration and action as the prior arts will be omitted.

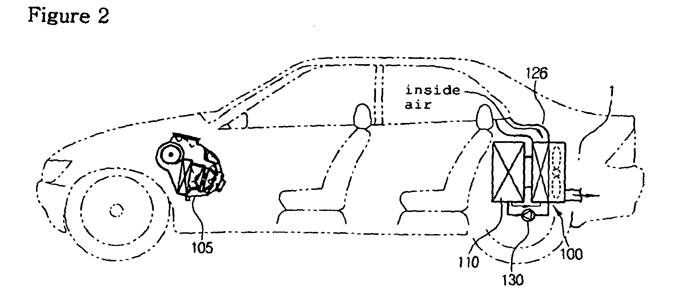

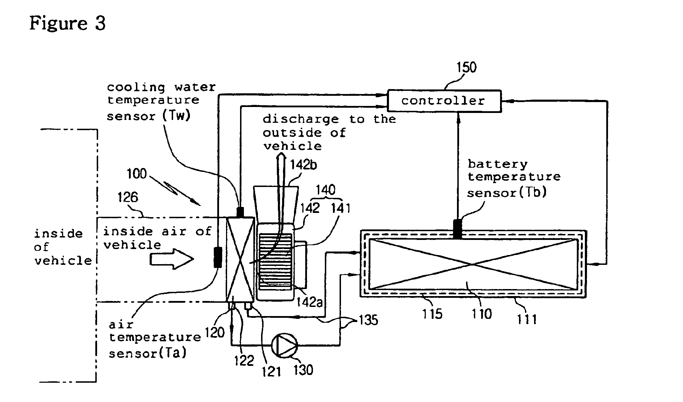

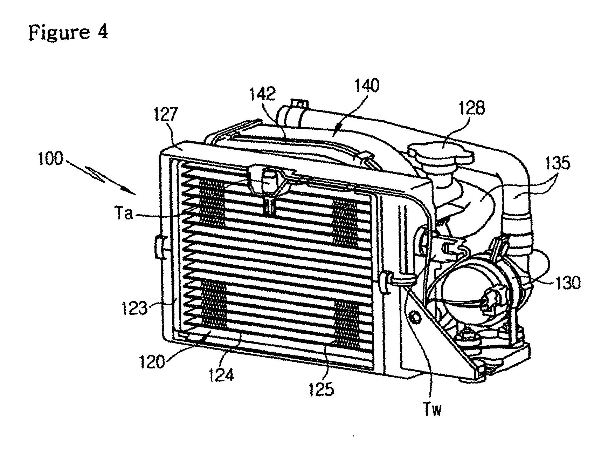

FIG. 2 is schematic diagram showing a state where a battery cooling device for vehicles according to the present invention is installed in the vehicle, FIG. 3 is a structural view of the battery cooling device according to the present invention, FIG. 4 is a front perspective view of the compact-sized battery cooling device according to the present invention;

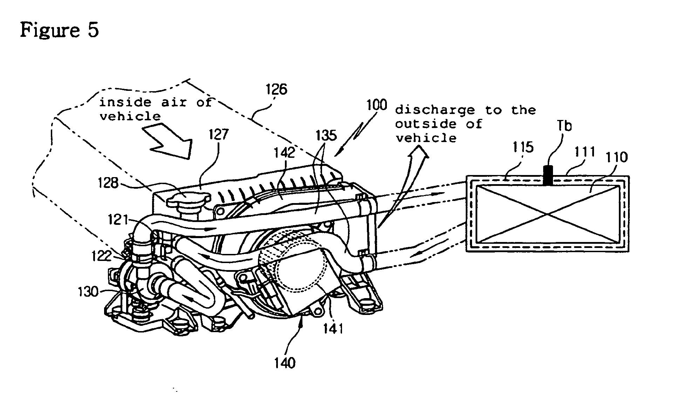

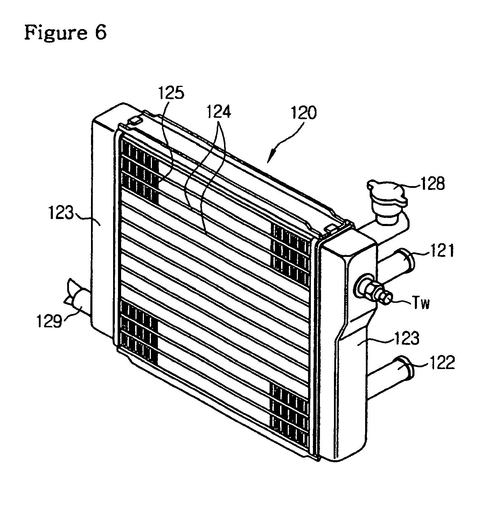

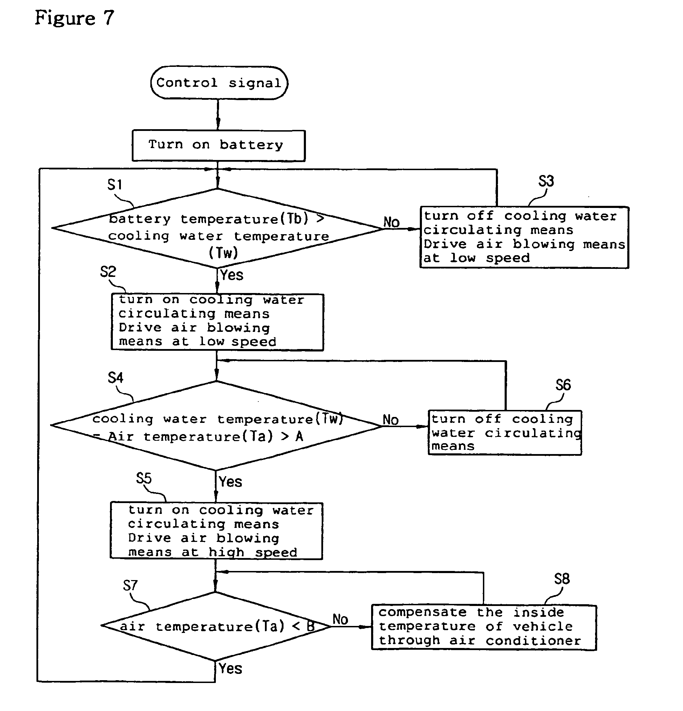

FIG. 5 is a rear perspective view of the compact-sized battery cooling device according to the present invention, FIG. 6 is a perspective view of a heat exchanger of the battery cooling device according to the present invention, and FIG. 7 is a flow chart showing a control method of the battery cooling device according to the present invention.

As shown in the drawings, a battery cooling device 100 for vehicles according to the present invention compactly includes: battery heat exchanging means 115 mounted in a trunk room 1 of the vehicle and also mounted on a battery 110; a heat exchanger 120 connected with the battery heat exchanging means 115 through a circulation pipe 135; cooling water circulating means 130; and air blowing means 140.

First, the battery 110 is mounted in the trunk room 1 of the vehicle in a state where it is inserted into a battery case 111.

Moreover, the battery heat exchanging means 115 is mounted on the battery 110, and has a passageway (not shown) formed therein for allowing a circulation of cooling water. It is preferable that the battery heat exchanging means 115 is in close contact with a side of the battery 110 in order to promote a smooth heat exchange between the cooling water circulating in the passageway and the battery 110.

Meanwhile, the battery heat exchanging means 115 may be mounted on the battery 110 in one of various types. That is, the battery heat exchanging means 115 may be a water jacket that surrounds the battery 110 to form a cooling water passageway between the battery heat exchanging means 115 and the battery 110, or may be a heat-exchange pipe mounted inside the battery 110.

Furthermore, as shown in FIG. 6, the heat exchanger 120 includes: a pair of tanks 123 spaced apart from each other at a predetermined interval; inlet and outlet pipes 121 and 122 formed on at least one of the tanks 123; a number of tubes 124 for communicating the tanks 123 with each other; and radiation fins 125 interposed between the tubes 124 for promoting heat exchange.

In addition, as shown in FIGS. 4 and 5, the heat exchanger 120 further includes a housing 127 adapted to surround the heat exchanger 120, and an air temperature sensor (Ta) is mounted on a side (front side) of the housing 127, which will be described later.

Furthermore, the tank 123 of the heat exchanger 120 includes a cap 128 for replenishing the tank with cooling water and a drain portion 129 for discharging the cooling water.

In the meantime, a baffle (not shown) is mounted between the inlet and outlet pipes 121 and 122 inside the tank 123 to form a cooling water flow channel. That is, the cooling water introduced through the inlet pipe 121 passes through the tubes 124 arranged on a side of the baffle, and then, U-turns in the other tank 123. After that, the cooling water passes through the tubes 124 arranged on the other side of the baffle, and then, is discharged through the outlet pipe 122.

Moreover, the heat exchanger 120 and the battery 110 are connected with each other via the circulation pipe 135, namely, the inlet and outlet pipes 121 and 122 of the heat exchanger 120 are communicatably connected to the battery heat exchanging means 115 mounted on the battery 110 via the circulation pipe 135, whereby a circulation line that the cooling water can circulate the heat exchanger 120 and the battery heat exchanging means 115 of the battery 110 is constructed. Here, the cooling water circulation line is a line independent of the cooling water circulation line of an engine.

Meanwhile, the heat exchanger 120 has a duct 126 mounted on the front part thereof for communicating the inside of the vehicle with the heat exchanger 120 so that the inside air of the vehicle can be introduced into the heat exchanger 120 when the air blowing means 140 is operated.

Furthermore, the cooling water circulating means 130 is mounted on the circulation pipe 135 to forcedly circulate the cooling water between the heat exchanger 120 and the battery heat exchanging means 115. Here, it is preferable that the cooling water circulating means 130 is a water pump mounted on the circulation pipe 135.

Additionally, the air blowing means 140 is mounted on a side of the heat exchanger 120 to forcedly blow the inside air of the vehicle to the heat exchanger 120.

The air blowing means 140 includes: a scroll case 142 having an inlet 142a coupled to the rear portion of the heat exchanger 120 and an outlet 142b formed in a radial direction of the inlet 142a; and a fan 141 rotatably mounted inside the scroll case 142.

Accordingly, when the air blowing means 140 is operated, the inside air of the vehicle is blown to the heat exchanger 120 by a rotation of the fan 141, and the air blown to the heat exchanger 120 is sucked to the scroll case 142 after passing through the heat exchanger 120. After that, the air is discharged to the outside of the vehicle through the outlet 142b.

In the meantime, the circulation pipe 135 is fixed and coupled on the rear face of the scroll case 142, and in this instance, the battery cooling device 100 can be constructed in a compact size since the circulation pipe 135 is mounted on the rear face of the scroll case 142 in such a way as to face the outlet 142b of the scroll case 142.

Here, since the outlet 142b of the scroll case 142 is formed in the radial direction of the inlet 142a, even though the circulation pipe 135 is fixed and coupled on the rear face of the scroll case 142, there is no interference between the air discharged from the air blowing means 140 and the air discharged from the circulation pipe 135. If the air blowing means 140 is constructed of an axial fan type, it is undesirable since there is interference between the air blowing means 140 and the circulation pipe 135 while air is blown to the rear side of the heat exchanger 120.

Moreover, a battery temperature sensor (Tb) for measuring the inside temperature of the battery 110 is mounted on the battery 110, and the air temperature sensor (Ta) and a cooling water temperature sensor (Tw) are mounted on the heat exchanger 120.

The air temperature sensor (Ta) is mounted on the front part (in a direction that the air is introduced) of the heat exchanger 120 to measure the inside air temperature of the vehicle before the air passes through the heat exchanger 120. The cooling water temperature sensor (Tw) is inserted and mounted to the tank 123 adjacent to the inlet pipe 121 of the heat exchanger 120 to measure temperature of the cooling water, which is introduced into the heat exchanger 120 after circulating the battery heat exchanging means 115 of the battery 110, at an inlet side of the heat exchanger 120.

In the meantime, a controller 150 is connected with the battery temperature sensor (Tb), the air temperature sensor (Ta) and the cooling water temperature sensor (Tw) to control on and off states of the cooling water circulating means 130 and speed of the fan 141 of the air blowing means 140 according to a temperature value provided from each temperature sensor.

In addition, the controller 150 is also connected to the battery 110 to control the battery 110.

FIG. 4 is a front perspective view showing an example of the battery cooling device 100 compactly including the heat exchanger 120, the air blowing means 140, the cooling water circulating means 130, and the circulation pipe 135, and FIG. 5 is a rear perspective view showing an example of the battery cooling device 100 compactly including the heat exchanger 120, the air blowing means 140, the cooling water circulating means 130, and the circulation pipe 135. Since the battery cooling device 110 can be installed in the vehicle in such a way as to be integrally assembled to a side of the battery case 111, a more compact-sized battery cooling device can be constructed.

As described above, in the battery cooling device 100 according to the present invention, when the cooling water circulating means 130 is turned on, the cooling water circulates the heat exchanger 120, the circulation pipe 135, the battery heat exchanging means 115 of the battery 110, the circulation pipe 135, and the heat exchanger 120 in order.

Here, when the air blowing means 140 is operated, the inside air of the vehicle passes through the heat exchanger 120 by a blowing force of the air blowing means 140, and in this instance, the inside air of the vehicle heat-exchanges with the cooling water flowing inside the heat exchanger 120 to cool the cooling water, and then, is discharged to the outside of the vehicle.

As set forth, the cooling water cooled in the heat exchanger 120 cools the battery 110 while repeatedly circulating the batter heat exchanging means 115 of the battery 110.

In the meantime, the unexplained reference numeral 105 designates a front air conditioner of the vehicle that selectively introduces the inside and outside air through an operation of the air blowing means and control the inside air temperature of the vehicle to temperature set by a passenger through a heat-exchange with an evaporator or a heater core.

Hereinafter, referring to FIG. 7, a control method of the battery cooling device for the vehicles will be described as follows.

First, after the battery 110 is turned on by a control signal, compare a battery temperature (Tb) with a cooling water temperature (Tw) provided from the battery temperature sensor (Tb) and the cooling water temperature sensor (Tw) (S1).

As a result of the first step (S1), if the battery temperature (Tb) is higher than the cooling water temperature (Tw), the cooling water circulating means 130 is turned on and the air blowing means 140 is driven at low speed (LOW) (S2).

As the result of the first step (S1), if the battery temperature (Tb) is lower than the cooling water temperature (Tw), the cooling water circulating means 130 is turned off and the air blowing means 140 is driven at low speed (LOW) (S3).

That is, if the battery temperature (Tb) is higher than the cooling water temperature (Tw), the cooling water circulating means 130 and the air blowing means 140 are operated at the same time to thereby cool the battery 110 through the circulation of the cooling water. On the contrary, if the battery temperature (Tb) is lower than the cooling water temperature (Tw), since temperature of the battery 110 rises when the cooling water is circulated, the cooling water circulating means 130 is turned of and only the air blowing means 140 is operated to thereby cool the cooling water before the cooling water is circulated.

Continuously, after the second step (S2), compare a difference between the cooling water temperature (Tw) and the air temperature (Ta) provided from the cooling water temperature sensor (Tw) and the air temperature sensor (Ta) with a first set temperature (A) (S4).

As a result of the fourth step (S4), if the difference between the cooling water temperature (Tw) and the air temperature (Ta) is larger than the first set temperature (A), it means that the temperature difference is large. That is, since it means that the cooling water temperature (Tw) is higher than the inside air temperature of the vehicle, the cooling water circulating means 130 is continuously operated and the air blowing means 140 is driven at high speed (HIGH) (S5).

Here, it is preferable that the first set temperature (A) is within a range from 7°C to 12°C, which is a set temperature of the cooling water circulating means 130 to operate the cooling water circulating means 130. Of course, the value of the first set temperature (A) may be changed according to purposes.

As the result of the fourth step (S4), if the difference between the cooling water temperature (Tw) and the air temperature (Ta) is lower than the first set temperature (A), it means that the temperature difference is small. That is, since it means that the cooling water temperature (Tw) is similar to the inside air temperature of the vehicle. Accordingly, the cooling water circulating means 130 is turned off to prevent a drop of cooling efficiency (S6). In the sixth step (S6), the air blowing means 140 is continuously driven at low speed (LOW).

After that, compare the air temperature provided from the air temperature sensor (Ta) with a second set temperature (B) (S7).

As a result of the seventh step (S7), if the air temperature is higher than the second set temperature (B), compensate the inside temperature of the vehicle through the front air conditioner 105 (S8).

That is, in the fifth step (S5), if the air blowing means 140 is driven at high speed (HIGH) and introduces too much inside air of the vehicle into the battery cooling device, the inside air temperature of the vehicle might rise. Since the passenger may feel an unpleasant feeling due to a rise of the inside air temperature of the vehicle, if the air temperature, namely, the inside air temperature of the vehicle is higher than the second set temperature (B), in the eighth step (S8), control the air conditioner 105, which compensates the inside air temperature as much as the difference between the air temperature (Ta) and the second set temperature (B), to thereby provide an agreeable inside temperature.

Here, as a method for compensating the inside air temperature of the vehicle, convert an outside air introducing mode of the front air conditioner 105 into an inside air introducing mode, increase an air volume of air blowing means (not shown) of the front air conditioner 105, or rapidly make the inside air temperature lower than the second set temperature (B) by increasing the working ratio of a compressor (not shown) of the front air conditioner 105. Alternatively, there is a method to operate not only the front air conditioner 105 but also a rear air conditioner (not shown).

While to increase the working ratio of the compressor means to lower a compressor cutoff temperature to thereby enhance an ON ratio of the compressor in case of a fixed capacity type compressor, it means to increase a discharged refrigerant amount by adjusting an inclination angle of a swash plate in case of a variable capacity type compressor.

Meanwhile, as the result of the seventh step (S7), if the air temperature (Ta) is lower than the second set temperature (B), return to the first step (S1).

Here, it is preferable that the second set temperature is within a range from 27°C to 29°C, which is a temperature necessary in an idle state of an air conditioner of the vehicle. Of course, the value of the second set temperature (B) may be changed according to purposes.

As described above, the battery cooling device according to the present invention compactly includes the battery heat exchanging means mounted on the battery to cooling the battery in the water cooling type, and the heat exchanger, the air blowing means and the cooling water circulating means connected with the battery heat exchanging means, the operations of the air blowing means and the cooling water circulating means are controlled in such a way as to compare the battery temperature, cooling water temperature and inside air temperature of the vehicle with one another. Accordingly, the present invention can enhance efficiency of the battery by properly controlling the battery temperature, reduce power consumption and noise by properly operating the air blowing means and the cooling water circulating means, and satisfy necessary inside temperature conditions while cooling the battery using the inside air of the vehicle.

While the present invention has been described with reference to the particular illustrative embodiment, it is not to be restricted by the embodiment but only by the appended claims.

## Claims

1. A battery cooling device for vehicles, which cools a battery (110) installed in a trunk room (1) of the vehicle, wherein the battery cooling device comprises:
battery heat exchanging means (115) mounted on the battery (110) and having a passageway formed therein for allowing a circulation of cooling water;
a heat exchanger (120) connected with the battery heat exchanging means (115) via a circulation pipe (135) for heat-exchanging the cooling water circulating along the circulation pipe (135) with the inside air of the vehicle;
cooling water circulating means (130) mounted on the circulation pipe (135) for circulating the cooling water between the heat exchanger (120) and the battery heat exchanging means (115) ; and
air blowing means (140) mounted on a side of the heat exchanger (120) for forcedly blowing the inside air of the vehicle to the heat exchanger (120) **characterized in that** the air blowing means (140) includes:
a scroll case (142) having an inlet (142a) coupled to the rear portion of the heat exchanger (120) and an outlet (142b) formed in a radial direction of the inlet (142a); and
a fan (141) rotatably mounted inside the scroll case (142).

2. The battery cooling device according to claim 1, further comprising a controller (150) adapted to control ON and OFF states of the cooling water circulating means (130) and a stage of the air blowing means (140) according to values of temperature of the battery (110), temperature of air introduced into the heat exchanger (120) and temperature of cooling water of the heat exchanger (120).

3. The battery cooling device according to claim 2, **characterized in that** a battery temperature sensor (Tb) is mounted on the battery (110) and connected with the controller (150) to measure temperature of the battery (110).

4. The battery cooling device according to claim 1 or 2, **characterized in that** an air temperature sensor (Ta) and a cooling water temperature sensor (Tw) are respectively mounted on the heat exchanger (120) to measure temperature of the air introduced into the heat exchanger (120) and temperature of the cooling water of the heat exchanger (120).

5. The battery cooling device according to claim 4, wherein the cooling water temperature sensor (Tw) is mounted on a side of a tank (123) adjacent to an inlet pipe (121) mounted on the heat exchanger (120) to thereby measure the cooling water temperature at an inlet side of the heat exchanger (120).

6. The battery cooling device according to claim 4, wherein the heat exchanger (120) further includes a housing (127) adapted to surround the heat exchanger (120) and having an air temperature sensor (Ta) mounted on a side thereof.

7. The battery cooling device according to claim 1, wherein the heat exchanger (120) includes:
a pair of tanks (123) spaced apart from each other at a predetermined interval;
inlet and outlet pipes (121; 122) formed on the tank (123) and connected with the circulation pipe (135);
a number of tubes (124) for communicating the tanks (123) with each other; and
radiation fins (125) interposed between the tubes (124).

8. The battery cooling device according to claim 1, wherein the heat exchanger (120) has a duct (126) mounted on a side thereof for communicating the heat exchanger (120) with the inside of the vehicle in such a way that the inside air of the vehicle can be introduced into the heat exchanger (120).

## Patentansprüche

1. Batteriekühlungseinrichtung für Fahrzeuge, die eine in einem Kofferraum (1) des Fahrzeugs eingebaute Batterie (110) kühlt, wobei die Batteriekühlungseinrichtung Folgendes umfasst:
Batterie-Wärmeaustauschmittel (115), die an der Batterie (110) angebracht sind und einen in denselben angeordneten Durchgang haben, um einen Umlauf von Kühlwasser zu ermöglichen,
einen Wärmeaustauscher (120), der über ein Umlaufrohr (135) mit den Batterie-Wärmeaustauschmitteln (115) verbunden ist, um Wärme das längs des Umlaufrohres (135) umlaufende Kühlwasser mit der Innenluft des Fahrzeugs zu tauschen,
Kühlwasser-Umwälzmittel (130), die an dem Umlaufrohr (135) angebracht sind, um das Kühlwasser zwischen dem Wärmeaustauscher (120) und den Batterie-Wärmeaustauschmitteln (115) umzuwälzen, und
Luftblasmittel (140), die an einer Seite des Wärmeaustauschers (120) angebracht sind, um zwangsweise die Innenluft des Fahrzeugs zu dem Wärmeaustauscher (120) zu blasen,
**dadurch gekennzeichnet, dass** die Luftblasmittel (140) Folgendes einschließen:
ein Schneckengehäuse (142), das einen Einlass (142a), der an den hinteren Abschnitt des Wärmeaustauschers (120) gekoppelt ist, und einen Auslass (142b), der in einer radialen Richtung des Einlasses (142a) geformt ist, hat, und
ein Gebläse (141), das drehbar innerhalb des Schneckengehäuses (142) angebracht ist.

2. Batteriekühlungseinrichtung nach Anspruch 1, die ferner ein Steuergerät (150) umfasst, das dafür eingerichtet ist, die Ein- und Aus-Zustände der Kühlwasser-Umwälzmittel (130) und eine Stufe der Luftblasmittel (140) entsprechend den Werten der Temperatur der Batterie (110), der Temperatur der in den Wärmeaustauscher (120) eingeleiteten Luft und der Temperatur des Kühlwassers des Wärmeaustauschers (120) zu steuern.

3. Batteriekühlungseinrichtung nach Anspruch 2, **dadurch gekennzeichnet, dass** ein Batterie-Temperatursensor (Tb) an der Batterie (110) angebracht und mit dem Steuergerät (150) verbunden ist, um die Temperatur der Batterie (110) zu messen.

4. Batteriekühlungseinrichtung nach Anspruch 1 oder 2, **dadurch gekennzeichnet, dass** ein Luft-Temperatursensor (Ta) und ein Kühlwasser-Temperatursensor (Tw) jeweils an dem Wärmeaustauscher (120) angebracht sind, um die der Temperatur der in den Wärmeaustauscher (120) eingeleiteten Luft und die Temperatur des Kühlwassers des Wärmeaustauschers (120) zu messen.

5. Batteriekühlungseinrichtung nach Anspruch 4, wobei der Kühlwasser-Temperatursensor (Tw) an einer Seite eines Tanks (123) angrenzend an ein an dem Wärmeaustauscher (120) angebrachtes Einlassrohr (121) angebracht ist, um dadurch die Temperatur des Kühlwassers an einer Einlass-Seite des Wärmeaustauschers (120) zu messen.

6. Batteriekühlungseinrichtung nach Anspruch 4, wobei der Wärmeaustauscher (120) ferner ein Gehäuse (127) umfasst, das dafür eingerichtet ist, den Wärmeaustauscher (120) zu umschließen, und einen an einer Seite desselben angebrachten Luft-Temperatursensor (Ta) hat.

7. Batteriekühlungseinrichtung nach Anspruch 1, wobei der Wärmeaustauscher (120) Folgendes einschließt:
ein Paar von Tanks (123), die mit einem vorbestimmten Abstand entfernt voneinander angeordnet sind,
Einlass- und Auslassrohre (121; 122), die an dem Tank (123) geformt und mit dem Umlaufrohr (135) verbunden sind,
eine Anzahl von Rohren (124), um die Tanks (123) miteinander zu verbinden, und
Abstrahlungslamellen (125), die zwischen den Rohren (124) angeordnet sind.

8. Batteriekühlungseinrichtung nach Anspruch 1, wobei der Wärmeaustauscher (120) eine an einer Seite desselben angebrachte Leitung (126) hat, um den Wärmeaustauscher (120) auf eine solche Weise mit dem Inneren des Fahrzeugs zu verbinden, dass die Innenluft des Fahrzeugs in den Wärmeaustauscher (120) eingeleitet werden kann.

## Revendications

1. Un dispositif de refroidissement de batterie pour véhicule, pour refroidir une batterie (110) installée dans un coffre (1) du véhicule, le dispositif de refroidissement de batterie comprenant :
des moyens d'échange de chaleur avec la batterie (115) montés sur la batterie (110) et présentant un passage formé au travers lui pour permettre une circulation d'eau de refroidissement ;
un échangeur de chaleur (120) connecté au moyen d'échange de chaleur avec la batterie (115) via un tuyau de circulation (135) pour échanger la chaleur de l'eau de refroidissement circulant le long du tuyau de circulation (135) avec l'air intérieur du véhicule ;
des moyens de circulation de l'eau de refroidissement (130) montés sur le tuyau de circulation (135) pour la circulation de l'eau de refroidissement entre l'échangeur de chaleur (120) et les moyens d'échange de chaleur avec la batterie (115), et
des moyens de soufflage d'air (140) montés sur un côté de l'échangeur de chaleur (120) pour souffler de façon forcée l'air intérieur du véhicule vers l'échangeur de chaleur (120)
**caractérisé en ce que** les moyens de soufflage d'air (140) comprennent :
un boîtier en spirale (142) ayant une entrée (142) couplé à la partie arrière de l'échangeur de chaleur (120) et une sortie (142b) formée dans une direction radiale de l'entrée (142a), et
un ventilateur (141) monté rotatif à l'intérieur du boîtier en spirale (142).

2. Le dispositif de refroidissement de batterie selon la revendication 1, comprenant en outre un contrôleur (150) adapté pour la commande des états MARCHE et ARRÊT des moyens de circulation de l'eau de refroidissement (130) et un niveau des moyens de soufflage d'air (140) en fonction des valeurs de la température de la batterie (110), la température de l'air introduit dans l'échangeur de chaleur (120) et la température de l'eau de refroidissement de l'échangeur de chaleur (120).

3. Le dispositif de refroidissement de batterie selon la revendication 2, **caractérisé en ce qu'**un capteur de température de la batterie (Tb) est monté sur la batterie (110) et est relié au contrôleur (150) pour mesurer la température de la batterie (110).

4. Le dispositif de refroidissement de batterie selon la revendication 1 ou 2, **caractérisé en ce qu'**un capteur de température de l'air (Ta) et un capteur de température de l'eau de refroidissement (Tw) sont respectivement montés sur l'échangeur de chaleur (120) pour mesurer la température de l'air introduit dans l'échangeur de chaleur (120) et la température de l'eau de refroidissement de l'échangeur de chaleur (120).

5. Le dispositif de refroidissement de batterie selon la revendication 4, dans lequel le capteur de température de l'eau de refroidissement (Tw) est monté sur un côté d'un réservoir (123) adjacent à un tuyau d'entrée (121) monté sur l'échangeur de chaleur (120) pour mesurer ainsi la température de l'eau de refroidissement au niveau d'un côté de l'entrée de l'échangeur de chaleur (120).

6. Le dispositif de refroidissement de batterie selon la revendication 4, dans lequel l'échangeur de chaleur (120) comprend en outre un boîtier (127) adapté à entourer l'échangeur de chaleur (120) et comportant un capteur de température de l'air (Ta) monté sur un côté de celui -ci.

7. Le dispositif de refroidissement de batterie selon la revendication 1, dans lequel l'échangeur de chaleur (120) comprend :
une paire de réservoirs (123) espacés l'un de l'autre d'un intervalle prédéterminé ;
des tuyaux d'entrée et de sortie (121, 122) formées sur le réservoir (123) et reliées avec le tuyau de circulation (135) ;
un nombre de tubes (124) pour la communication des réservoirs (123) les uns avec les autres, et
des ailettes de radiation (125) interposées entre les tubes (124).

8. Le dispositif de refroidissement de batterie selon la revendication 1, dans lequel l'échangeur de chaleur (120) comporte un conduit (126) monté sur un côté de celui -ci pour la communication de l'échangeur de chaleur (120) avec l'intérieur du véhicule de telle façon que l'air intérieur du véhicule puisse être introduit dans l'échangeur de chaleur (120).
